# EUROPÄISCHE PATENTANMELDUNG

(11) **EP 2 607 819 A2**
(43) Veröffentlichungstag der Anmeldung: **26.06.2013**
(21) Anmeldenummer: 12197922.3
(22) Anmeldetag: 18.12.2012
(51) Int. Cl.: F24J 2/54

(54) **Bewegungseinrichtung, Aufbau, Nachführvorrichtung, Solarsystem und Herstellverfahren**

(30) Priorität: 19.12.2011 DE 102011056583
(71) Anmelder: DEGERenergie GmbH, 72160 Horb (DE)
(72) Erfinder: Deger, Artur, 72296 Schopfloch-Oberiflingen (DE); Dürr, Martin, 72160 Horb (DE); Zanker, Gerhard, 72160 Horb-Altheim (DE)
(74) Vertreter: Sebastian, Jens

(57) **Zusammenfassung**

Der Gegenstand der vorliegenden Erfindung betrifft ein Solarsystem mit einer Nachführvorrichtung (100) umfassend einen Aufbau und eine Bewegungseinrichtung (20) für eine Nachführvorrichtung (100) eines Solarsystems, insbesondere zum Bewegen eines mit der Bewegungseinrichtung (20) verbundenen Aufbaus in Bezug auf einen Sonnenstand, umfassend mindestens eine um mindestens eine Elevationsachse (102) drehbare Dreheinheit (40) mit mindestens einer Aufnahme (42) zum Aufnehmen des Aufbaus, wobei zumindest die Dreheinheit (40) und/oder die Aufnahme (42) asymmetrisch und/oder exzentrisch relativ zu der Elevationsachse (102) ausgebildet ist/sind. Weiterhin betriff die Erfindung ein Herstellverfahren hierzu

## Beschreibung

Die Erfindung betrifft eine Bewegungseinrichtung für eine Nachführvorrichtung eines Solarsystems, insbesondere zum Bewegen eines mit der Bewegungseinheit verbundenen Aufbaus in Bezug auf einen Sonnenstand, gemäß dem Oberbegriff des Anspruchs 1.

Weiter betrifft die Erfindung einen Aufbau, insbesondere ein Solaraufbau, gemäß dem Oberbegriff des Anspruchs 8.

Zudem betrifft die Erfindung eine Nachführvorrichtung, insbesondere eine Solarmodulnachführvorrichtung, zur Nachführung mindestens eines Aufbaus nach einem Sonnenstand, gemäß dem Oberbegriff des Anspruchs 12.

Darüberhinaus betrifft die Erfindung ein Solarsystem, insbesondere ein Solarsystem für eine Photovoltaik, konzentrierende Solarenergie und/oder eine Solarthermieanwendung, gemäß dem Oberbegriff des Anspruchs 14.

Auch betrifft die Erfindung ein Herstellverfahren für eine Nachführvorrichtung, insbesondere eine erfindungsgemäße Solarnachführvorrichtung, zur Nachführung mindestens eines Aufbaus, insbesondere eines erfindungsgemäßen Aufbaus, nach einem Sonnenstand, gemäß dem Anspruch 15.

Aus dem Stand der Technik sind allgemein Nachführungen für Solaranlagen, Solarmodule oder Solarpanele bekannt.

Dabei sind allgemein um eine Elevationsachse drehbare Nachführungen bekannt. Bei den bekannten Nachführungen ist ein Solaraufbau symmetrisch ausgebildet. Dieser ist symmetrisch mit der Nachführung verbunden. Dabei ist der Aufbau derart angeordnet, dass bei einer Ausgangslage, das heißt einer Lage, in dem ein Aufbau horizontal, das heißt, im Wesentlichen waagerecht angeordnet ist, die Schwerkraft des Aufbaus von dessen Schwerpunkt durch die Elevationsachse verläuft.

Aus der DE 20 2009 005 140 U1 ist eine Nachführvorrichtung für ein Solarelement bekannt, mit einem um eine Achse drehbaren Träger, der über ein Antriebselement drehbar ist, und einem an einem Anker festlegbaren Kopplungselement, das eine Axiallagerfläche für den Träger aufweist und eine Aufnahme ausbildet, in die ein Anker einfügbar ist und über Befestigungsmittel klemmend festlegbar ist. Bei der Lösung ist der Aufbau und/oder die Dreheinheit symmetrisch aufgebaut. Die Tragarme sind dabei weit auskragend, sodass hier hohe Drehmomente auftreten können. Insbesondere ist hier ein Abstand zwischen einer Azimutdrehabene und der Elevationsachse relativ groß.

Aus der DE 101 92 244 ist eine Nachführvorrichtung, zur Nachführung eines Kollektors, Absorbers, Reflektors oder Photovoltaikmoduls nach dem Stand der Sonne bekannt, mit einem um eine erste Drehachse und eine zweite Drehachse drehbaren flächigen Träger, wobei die erste Drehachse im Wesentlichen horizontal und die zweite Drehachse im Wesentlichen vertikal verläuft, der flächige Träger an wenigstens zwei Auflagerpunkten in der ersten Drehachse drehbar an einem Aufnahmeträger befestigt ist und der Aufnahmeträger drehbar um die vertikale Drehachse an einem Standpfeiler befestigt ist, wobei der Aufnahmeträger mindestens einen oberen Querholm aufweist, an welchem seitliche Träger angebracht sind, welche mit einem unteren Querholm in Verbindung stehen, wobei die Querholme in deren Mitte Lager aufweisen, mit denen der Aufnahmeträger drehbar an dem Standpfeiler gelagert ist und wobei der Aufnahmeträger eine um die zweite Drehachse zylindrisch gebogene seitliche Zugmittelführung aufweist, durch welche Zugmittel geführt werden. Auch bei dieser bekannten Lösung ist der Aufbau symmetrisch, wobei ungünstige Drehmomente aufgrund langer Hebelarme auftreten können.

Aus der DE 32 29 248 A1 ist eine Halterung für eine Anordnung von Solarzellen bekannt. Die Anordnung umfasst eine Anordnung von Versteifungselementen oder -streben und eine Anordnung von Siliziumsolarzellen. Die Strebenanordnung hat zwei langgestreckte gerade Streben, die sich von einer Kante zur gegenüberliegenden Kante eines Substrats erstrecken. Zwischen den Streben befinden sich zwei mit ihnen verbundene Parallelstreben, die durch eine Mittelstrebe miteinander verbunden sind, sodass die drei Streben eine H-Struktur bilden. Diese Struktur hat den Vorteil, dass sie dem Substrat mit relativ wenigen Streben Steifigkeit verleiht.

Jede der Streben der Strebenanordnung ist in ihrem Querschnitt identisch. Jede Strebe weist mehrere Lagen aus verschiedenen Materialien auf. Das Kernmaterial ist ein gewebtes epoxidharzverstärktes Kohlefasermaterial. Die Fäden des Kerngewebes sind in zwei senkrecht aufeinander stehenden Richtungen orientiert. Das Gewebe ist so geformt, dass es einen Kanal mit einem Boden und zwei Schenkeln bildet. Von den Schenkeln und ragen in entgegengesetzten Richtungen horizontale Flansche weg.

Die Anordnung ist als Leichtbauanordnung für die Raumfahrt ausgebildet und umfasst Streben, die aus zusammengefügten Fasern besteht. Dabei sind die Streben U-förmig mit an den Schenkeln nach außen weisenden Flanschen ausgebildet. Für große Lasten ist die Anordnung nicht ausgebildet.

Es ist eine Aufgabe der vorliegenden Erfindung, eine nachführbare Solaranlage zu schaffen, die leichter baut, entsprehend leichter transportierbar und montierbar ist und die hohen Belastungen durch Gewichtskräfte und/oder Windkräfte standhält, insbesondere durch eine optimierte Lastverteilung.

Zudem ist es eine Aufgabe der vorliegenden Erfindung, ein Verfahren zu dessen Herstellung zu schaffen.

Diese und weitere Aufgaben werden ausgehend von einer Bewegungseinrichtung gemäß dem Anspruch 1, eines Aufbaus gemäß dem Anspruch 8, einer Nachführvorrichtung gemäß dem Anspruch 12, einem Solarsystem gemäß dem Anspruch 14 und einem Herstellverfahren gemäß dem Anspruch 15 in Verbindung mit deren Merkmalen gelöst. Vorteilhafte Weiterbildungen der Erfindung sind in den abhängigen Ansprüchen angegeben oder werden nachstehend im Zusammenhang mit der Beschreibung der Figuren angegeben.

Die Erfindung schließt die technische Lehre ein, dass bei einer Bewegungseinrichtung für eine Nachführvorrichtung eines Solarsystems, insbesondere zum Bewegen eines mit der Bewegungseinrichtung verbundenen Aufbaus in Bezug auf einen Sonnenstand, umfassend eine um mindestens eine Elevationsachse drehbare Dreheinheit mit einer Aufnahme zum Aufnehmen des Aufbaus, vorgesehen ist, dass die Dreheinheit und/oder die Aufnahme asymmetrisch und/oder exzentrisch relativ zumindenst zu der Elevationsachse ausgebildet ist/sind.

Die Bewegungseinrichtung umfasst mindestens eine Dreheinheit. Die Dreheinheit ist relativ zu den verbleibenden Teilen der Bewegungseinrichtung drehbar, insbesondere um die Elevationsachse drehbar, ausgebildet. In einer Ausführungsform ist genau eine Dreheinheit vorgesehen. In anderen Ausführungsformen sind mehrere Dreheinheiten vorgesehen. Die mehreren Dreheinheiten sind in einer Ausführungsform zumindest teilweise miteinander integriert. In anderen Ausführungsformen sind die Dreheinheiten separat ausgebildet. Die Dreheinheiten sind in einer Ausführungsform gleich ausgebildet. In anderen Ausführungsformen sind die Dreheinheiten zumindest teilweise unterschiedlich ausgebildet. Bevorzugt ist eine Dreheinheit vorgesehen.

Damit ein Aufbau über die Dreheinheit drehbar ist, weist die Dreheinheit eine Aufnahme auf. Die Aufnahme ist in einer Ausführungsform als Anformung ausgebildet. In einer bevorzugten Ausführungsform ist die Aufnahme als Ausnehmung, insbesondere als Nut ausgebildet. Dabei weist in einer Ausführungsform die Dreheinheit eine Aufnahme auf. In einer anderen Ausführungsform weist die Dreheinheit mehrere Aufnahmen auf.

Die Dreheinheit ist drehbar um eine Elevationsachse angeordnet. Dabei ist die Dreheinheit von einer nicht verdrehten oder nicht ausgelenkten Ausgangsposition in mindestens eine verschwenkte Position oder Betriebsposition verschwenkbar und/oder drehbar.

Unter einer Ausgangslage oder Ausgangsposition im Sinne der vorliegenden Erfindung versteht man eine Lage, in welcher die Bewegungseinrichtung nicht verschwenkt ist, insbesondere nicht um eine Elevationsachse verschwenkt ist. Die Ausgangslage ist derart ausgebildet, dass ein Aufbau, der an der Bewegungseinrichtung angeordnet ist, im Wesentlichen horizontal und/oder waagerecht angeordnet ist. Genauer ist die Dreheinheit nicht verschwenkt, sondern befindet sich in einer nichtverdrehten Ausgangslage.

Bevorzugt ist die Dreheinheit stufenlos in verschiedene Betriebspositionen verschwenkbar. In einer anderen Ausführungsform ist die Dreheinheit zumindest teilweise gestuft in verschiedene Betriebspositionen verschwenkbar. Dabei ist die Dreheinheit asymmetrisch ausgebildet. Insbesondere ist die Dreheinheit asymmetrisch in Bezug auf die Elevationsachse ausgebildet. Bevorzugt ist die Dreheinheit in einer nicht ausgelenkten oder verschwenkten Position, das heißt in einer Ausgangsposition, asymmetrisch ausgebildet, insbesondere in Bezug auf die Elevationsachse. In einer asymmetrischen Ausführungsform verläuft ein Massen- und/oder Volumenschwerpunkt der Dreheinheit - in Richtung eines Schwerefelds - das heißt etwa in vertikale Richtung, versetzt zu einer Vertikalen oder Schwerelinie durch die Elevationsachse. Das heißt, die Gewichtskraft durch den Volumen- und/oder Masseschwerpunkt läuft versetzt zu einer gleichgerichteten Senkrechten durch die Elevationsachse. In einer Ausführungsform liegt eine gleich zu der Elevationsachse gerichtete Achse durch den Massen- und/oder Volumenschwerpunkt der Dreheinheit parallel, das heißt seitlich versetzt, zu der Elevationsachse.

Analoges gilt für die Aufnahmen. Die Aufnahme ist asymmetrisch ausgebildet. Insbesondere ist die Aufnahme asymmetrisch in Bezug auf die Elevationsachse ausgebildet. Bevorzugt ist die Aufnahme in einer nicht ausgelenkten oder verschwenkten Position, das heißt in einer Ausgangsposition, asymmetrisch ausgebildet, insbesondere in Bezug auf die Elevationsachse. In einer asymmetrischen Ausführungsform verläuft ein Massen- und/oder Volumenschwerpunkt der Aufnahme in Richtung eines Schwerefelds, das heißt etwa in vertikale Richtung, versetzt zu einer Vertikalen oder Schwerelinie durch die Elevationsachse. Das heißt, die Gewichtskraft durch den Volumen- und/oder Masseschwerpunkt läuft versetzt zu einer gleichgerichteten Senkrechten durch die Elevationsachse. In einer Ausführungsform liegt eine gleich zu der Elevationsachse gerichtete Achse durch den Massen- und/oder Volumenschwerpunkt der Aufnahme parallel, das heißt seitlich versetzt, zu der Elevationsachse.

Eine Ausführungsform der Erfindung sieht vor, dass die Aufnahme in Bezug auf eine Richtung von der Elevationsachse in Richtung Aufbau und/oder zu einer Vertikalen durch die Elevationsachse quer zu dieser Richtung, insbesondere lateral und/oder entgegen der Richtung angeordnet ist. Insbesondere ist die Aufnahme in Bezug auf eine Richtung von der Elevationsachse in Richtung Aufbau in einer Ausgangsposition quer zu dieser Richtung, insbesondere lateral und/oder entgegen der Richtung angeordnet. In der Ausgangsposition verläuft die Richtung vertikal oder genauer entlang eines Schwerfelds der Erde. In der Ausgangsposition ist der meist flächige Aufbau mit seinen Hauptflächen im Wesentlichen horizontal ausgerichtet. Das heißt, die Vertikale bildet eine Flächennormale zu dem flächigen Aufbau. Die Aufnahme, genauer dessen Massen- und/oder Volumenschwerpunkt, ist in Bezug auf die Flächennormale versetzt zu dieser angeordnet. Dabei ist der Versatz in vertikaler Richtung und/oder in horizontaler Richtung ausgebildet. Legt man eine horizontale Ebene durch die Elevationsachse, so ist der Massen- und/oder Volumenschwerpunkt der Aufnahme in der Ebene versetz zu der Elevationsachse und/oder in einer anderen Ebene dazu angeordnet. Bevorzugt liegt der Massen- und/oder Volumenschwerpunkt in einer dem Erdmittelpunkt näher liegenden anderen Ebene in Bezug auf die horizontale Elevationsachsenebene. Bei einem Drehen der Dreheinheit ändern sich entsprechend die Verhältnisse dahingehend, dass die Ebenen sich aufgrund der Drehung ebenfalls drehen. Dann liegt der Massen- und/oder Volumenschwerpunkt entsprechend der Drehung links oder rechts unter oder über der Elevationsachsenebene. Die Abstände der Ebenen bleiben konstant. Bevozugt liegt in einer Ausführungsform der Massen- und/oder Volumenschwerpunkt der Aufnahme in einer Ausgangsposition seitlich versetzt und näher zum Erdmittelpunkt als die Elevationsachse.

In einer weiteren Ausführungsform ist vorgesehen, dass die Dreheinheit mindestens einen auskragenden Hebelarm aufweist. Der Hebelarm ist an einem Ende im Bereich der Elevationsachse angeordnet. Von da aus kragt der Hebelarm lateral von der Elevationsachse hervor. Dabei kragt der Hebelarm in der Ausgangsposition etwa horizontal von der Elevationsachse hervor. In einer bevorzugten Ausführungsform ist die Dreheinheit als auskragender Hebelarm ausgebildet. In einer anderen Ausführungsform weist die Dreheinheit mehrere auskragende Hebelarme auf. Die Hebelarme sind in einer Ausführungsform gleich ausgebildet. In einer anderen Ausführungsform sind die Hebelarme zumindest teilweise unterschiedlich ausgebildet. Bevorzugt ist ein einziger Hebelarm vorgesehen. In einer anderen vorteilhaften Ausführungsform sind mehrere voneinander beabstandete Hebelarme vorgesehen, beispielsweise zwei, drei, vier oder mehr Hebelarme. Die Hebelarme sind in einer Ausführungsform äquidistant voneinander beabstandet. In einer anderen Ausführungsform sind die Hebelarme unterschiedliche voneinander beabstandet. In wiederum einer anderen Ausführungsform sind die Hebelarme ortsfest zueinander, das heißt mit einem festen Abstand zueinander angeordnet. In einer anderen Ausführungsform sind die Hebelarme variabel zueinander angeordnet. Eine bevorzugte Ausführungsform sieht vor, dass die Hebelarme miteinander verbunden, insbesondere starr miteinander verbunden sind. Bevorzugt sind die Hebelarme einteilig miteinander ausgebildet.

Bevorzugt ist die Aufnahme an dem auskragenden Hebelarm ausgebildet. Vorzugsweise ist die Aufnahme an einem zu der Elevationsachse benachbarten Ende des Hebelarms ausgebildet. In einer Ausführungsform ist die Aufnahme in der Ausgangsposition seitlich versetzt zu der Elevationsachse ausgebildet. An dem von der Elevationsachse entfernten Ende ist bevorzugt ein Verbindungsbereich zur Verbindung mit einem Aktuator ausgebildet. Über den Aktuator wird eine Verdrehkraft in den Hebelarm eingeleitet, sodass dieser um die Elevationsachse verschwenkbar ist. Weiter bevorzugt ist die Aufnahme möglichst nah an einer Oberkante der Dreheinheit in Richtung der Azimutachse ausgebildet, sodass der Zentralträger möglichst gering beabstandet zu der Dreheinheit angeordnet ist. Bevorzugt beträgt der Abstand der Mittellinie der Elevationsachse bis zur zugewandten Oberseite der Dreheinheit in Richtung Azimutachse weniger als 250 mm, weiter bevorzugt weniger als 150 mm und am meisten bevorzugt weniger als 100 mm.

Durch die auskragende Form ist der Hebelarm asymmetrisch ausgebildet, zumindest in Bezug auf die Elevationsachse.

Eine andere Ausführungsform der Erfindung sieht vor, dass zumindest eine weitere Bewegungseinheit vorgesehen ist, um den verbundenen Aufbau in Richtung mindestens eines weiteren Freiheitsgrades der Bewegungseinrichtung zu bewegen. In einer Ausführungsform ist eine weitere Bewegungseinheit vorgesehen. In noch einer anderen Ausführungsform sind mehrere Bewegungseinheiten vorgesehen. Die weitere Bewegungseinheit ist in einer Ausführungsform als translatorische Bewegungseinheit ausgebildet. In einer anderen Ausführungsform ist die weitere Bewegungseinheit als rotatorische Bewegungseinheit vorgesehen. Noch eine weitere Ausführungsform sieht eine translatorische und rotatorische Bewegungseinheit vor. Die weitere Bewegungseinheit ist in einer Ausführungsform als separates Bauteil ausgebildet. In einer anderen Ausführungsform sind die Bewegungseinheiten integriert, insbesondere als ein Bauteil ausgebildet. Jede Bewegungseinheit weist einen Freiheitsgrad von mindestens eins auf, das heißt, die Bewegungseinheit ist für eine Bewegung um mindestens einen Freiheitsgrad ausgebildet. Bevorzugt ist mindestens eine zweite Bewegungseinheit ausebildet. Dabei ist die zweite Bewegungseinheit vorzugsweise als zweite Dreheinheit ausgebildet, wobei die zweite Dreheinheit als um eine Azimutachse drehbare Dreheinheit ausgebildet ist. Die Azimutachse ist bevorzugt senkrecht zu der Elevationsachse ausgebildet. Dabei ist die Azimutachse vertikal bzw. in Rictung der Schwerelinien ausgerichtet.

Somit weist die Bewegungseinrichtung zwei Bewegungseinheiten auf. Eine Bewegungseinheit ist als erst Dreheinheit, die um die Elevationsachse drehbar ist, ausgebildet. Die andere Bewegungseinheit ist als zweite Dreheinheit, die um die Azimutachse drehbar ist, ausgebildet. Auf diese Weise ist mit der Bewegungseinrichtung eine Nachführung nach einem Sonnenstand durchführbar.

Eine weitere Ausführungsform der Erfindung sieht vor, dass eine der weiteren Bewegungseinheiten als ein zumindest um eine Azimutachse drehbarer Bewegungsantrieb ausgebildet. Bevorzugt ist die zweite Bewegungseinheit als zweite Dreheinheit ausgebildet. Die zweite Dreheinheit ist als drehbarer Bewegungsantrieb ausgebildet. Hierzu weist die zweite Dreheinheit einen Aktuator auf, beispielsweise einen Motor, einen Linearantrieb oder dergleichen. Vorzugsweise weist der Bewegungsantrieb ein Getriebe auf. Das Getriebe ist beispielsweise als Umlenkgetriebe und/oder Übersetzungsgetriebe ausgebildet. In einer Ausführungsform weist das Getriebe ein Schneckengetriebe auf. Über dieses ist der Drehantrieb steuerbar. Somit ist in einer vorteilhaften Ausführung vorgesehen, dass als Bewegungsantrieb ein Getriebe vorgesehen ist, welches eine Drehung der Bewegungseinrichung um eine Azimutachse, das heißt eine vertikale Achse ermöglicht. In anderen Ausführungsformen ist eine um mindestens eine Translationsachse bewegbare Bewegungseinheit vorgesehen. Vorzugsweise ist ein Getriebe vorgesehen. Das Getriebe ist zur Anbindung an einen Standpfeiler oder dergleichen ausgebildet. Hierzu weist das Getriebe einen entsprechenden Flansch oder Anschluss auf.

Die zweite Dreheinhrichtung, das heißt der Bewegungsantrieb, weist vorzugsweise einen Drehkranz auf. Der Drehkranz ist bevorzugt in einem Gehäuse angeordnet. Dabei ist in einer Ausführungsform der Drehkranz nach Art eines Kugellagers oder dergleichen ausgebildet. Er weist bevorzugt zwei relativ zueinander bewegbare Ringe auf, welche für eine axiale Lastaufnahme ausgebildet sind. Andere Ausführungsformen sind ebenfalls einsetzbar.

Zudem sieht eine Ausführungsform vor, dass die Bewegungseinrichtung mindestens eine Lagereinheit zur drehbaren Lagerung der Dreheinheit aufweist. In einer Ausführung ist eine Lagereinheit vorgesehen. In einer anderen Ausführungsform sind mehrere Lagereinheiten vorgesehen. Damit die Dreheinheit um die Elevationsachse drehbar ist, ist diese mit einer entsprechenden Lagereinheit gelagert. Dabei ist die Lagereinheit bevorzugt an der weiteren Bewegungseinheit ausgebildet. Insbesondere ist die Lagereinheit an einem Gehäuse der zweiten Dreheinheit ausgebildet. Dazu weist die Lagereinheit zumindest einen Lagerbock mit einer Lagerstelle auf. Bevorzugt sind mehrere Lagerböcke mit je einer Lagerstelle vorgesehen, insbesondere zwei voneinander beabstandete Lagerböcke. Der Abstand der Lagerböcke ist dabei so bemessen, dass eine Breite des durch die Lagerböcke gebildeten Lagers schmaler ist als eine Breite der Dreheinheit um die Azimutachse. Die Breite des Lagers beträgt vorzugsweise weniger als 100% der in die Richtung des Lagers projizierten Breite der Dreheinheit, weiter bevorzugt weniger als 95% der Breite, noch weiter bevorzugt weniger als 90% und am meisten bevorzugt weniger als 85% der Breite. Dabei ist ein Abstand der Lagerböcke zu der Azimutachse minimiert. Der Abstand beträgt bevorzugt weniger als 50% des Durchmessers der Dreheinheit, weiter bevorzugt weniger als 45% des Durchmessers und am meisten bevorzugt weniger als 40% des Durchmessers. Dabei wird der Durchmesser gemessen von der Azimutachse radial in Richtung Gehäuse bis zu einem äußeren Drehkranz der Dreheinheit.

Die Lagerstelle weist bevorzugt ein Wälzlager und/oder ein Gleitlager auf. Dabei ist die jeweilige Lagerstelle bevorzugt als durchgängige Lagerstelle ausgebildet, durch welche ein Wellen- oder Achselement durchragen kann. Zwischen den Lagerstellen oder durch diese durchgehend ist das Wellenelement oder Achselement angeordnet, deren Mittelachse die Elevationsachse bildet. Mit dem Achselement ist die erste Dreheinheit verbunden, sodass diese erste Dreheinheit um die Elevationsachse drehbar gelagert ist. Durch eine Betätigung des an dem von der Elevationsachse entfernt angeordneten Aktuators ist die Dreheinheit um die Elevationsachse drehbar. Mit der Dreheinheit wird auch die Aufnahme um die Elevationsachse gedrecht. Hierbei wird ein in der Aufnahme aufgenommener Aufbau ebenfalls um die Elevtationsachse gedreht.

Eine vorteilhafte Ausführungsform der Erfindung sieht vor, dass die Lagereinheit und die mindestens eine weitere Bewegungseinheit integriert ausgebildet sind. Bevorzugt ist die Lagereinheit an der Bewegungseinheit befestigt, insbesondere unlösbar befestigt. Vorzugsweise sind ein Gehäuse der Bewegungseinheit oder Teile der Bewegungseinheit einteilig mit Teilen der Lagereinheit ausgebildet. Bevorzugt sind das Gehäuse und die Lagereinheit einteilig ausgebildet, beispielsweise als Gußteil. In anderen Ausführungsformen sind die Lagereinheit und die Bewegungseinheit miteinander verschweißt oder anderweitig stoffschlüssig miteinander verbunden. Dabei ragt die Lagereinheit in vertikale Richtung, das heißt in Richtung der Azimutachse von der weiteren Bewegungseinheit in Richtung Aufbau hervor. Die Lagereinheit ist bevorzugt versetzt zu der Azimutachse ausgebildet. Das heißt, ein Massen- und/oder Volumenschwerpunkt der Lagereinheit verläuft versetzt, das heißt nicht koaxial, zu der Azimutachse. Auf diese Weise ist die Lagereinheit asymmetrisch und/oder exzentrisch zu der Azimutachse bzw. zu der Dreheinheit angeordnet.

Die Erfindung schließt weiter die technische Lehre ein, dass bei einem Aufbau insbesondere bei einem Solaraufbau, umfassend mindestens eine um eine Elevationsachse schwenkbare Tragstruktur und/oder mindestens ein Solarmodul, vorgesehen ist, dass der Aufbau asymmetrisch zumindest in Bezug auf die Elevationsachse ausgebildet ist.

Der Aufbau ist bevorzugt als Solaraufbau ausgebildet. Hierzu weist der Aufbau mindestens ein Solarmodul auf. Ein Solarmodul im Sinne der Erfindung ist ausgewählt aus der Gruppe umfassend Kollektoren, Absober, Reflektoren und/oder Photovoltaikmodule, das heißt jegliches Modul, welches für die Umwandlung von Solarenergie verwendet wird. Bevorzugt sind die Solarmodule flächig ausgebildet, das heißt, diese sind in eine Abmessungsrichtung klein gegenüber den anderen Abmessungsrichtungen ausgebildet. Vorzugsweise ist das Solarmodul als plattenförmiger Körper mit einer Solarseite und einer gegenüberliegenden Aufbauseite ausgebildet. Das Solarmodul ist in einer Ausführungsform in einer Draufsicht rechteckig und/oder quadratisch ausgebildet. In anderen Ausführungsformen sind andere Formen, beispielsweise runde oder polygonale Formen vorgesehen. Vorzugsweise umfasst der Aufbau mehrere Solarmodule. Die mehreren Solarmodule sind bevorzugt alle gleich ausgebildet. In einer anderen Ausführungsform sind zumindest zwei Solarmodule unterschiedlich ausgebildet. Bevorzugt sind die Solarmodule symmetrisch ausgebildet, insbesondere in einer Draufsicht symmetrisch ausgebildet, beispielsweise als Rechteck, Quadrat oder Kreis. Weiter bevorzugt weist der Aufbau mehrere in einer Reihe und/oder einer Spalte angeordnete Solarmodule auf. Die Solarmodule grenzen dabei in einer Ausführungsform aneinander an. In einer anderen Ausführungsform sind die Solarmodule voneinander beabstandet, insbesondere äquidistant voneinander beabstandet. Auf diese Weise ist eine Solarmodulmatrix oder Solarmodulfeld realisiert. Die Solarmodulanordnung ist in einer Ausführungsform symmetrisch ausgebildet. In einer anderen Ausführungsform ist die Solarmodulanordnung asymmetrisch ausgebildet. Insbesondere weist die Solarmodulanordnung einen Volumenschwerpunkt und einen Masseschwerpunkt auf. In einer Ausführungsform fallen Volumenschwerpunkt und Massenschwerpunkt zusammen. In einer anderen Ausführungsform liegen Volumenschwerpunkt und Massenscherpunkt zumindest in eine Richtung versetzt zueinander. Bevorzugt verläuft eine Senkrechte durch den Volumen- und/oder Massenschwerpunkt des Solarmoduls bzw. der Solarmodulanordnung versetzt zu einer Senkrechten durch die Elevationsachse, insbesondere in einer Ausgangsposition.

Weiter umfasst der Aufbau in einer Ausführungsform eine Tragstruktur. Das mindestens eine Solarmodul ist mit der Tragstrultur verbunden. In einer Ausführungsform umfasst die Tragstruktur eine Schieneneinheit oder mehrere Schieneneinheiten. Die Schieneneinheiten sind in einer Ausführungsform gleich ausgebildet. In einer anderen Ausführungsform sind die Schieneneinheiten unterschiedlich ausgebildet. Bevorzugt sind die Schieneneinheiten gleich ausgebildet. Vorzugsweise sind die Schieneneinheiten als Profile, Profilschienen und dergleichen ausgebildet. Dabei sind die Schieneneinheiten zum Befestigen der Solarmodule ausgebildet, insbesondere zum lösbaren und/oder verstellbaren Befestigen. Vorzugsweise sind die Schieneneinheiten zueinander beabstandet, insbesondere äquidistant zueinander beabstandet. In einer Ausführungsform sind die Schieneneinheiten symmetrisch ausgebildet. In einer anderen Ausführungsform sind die Schieneneinheiten asymmetrisch ausgebildet. Eine Ausführungsform sieht vor, dass die Solarmodule und/oder die Schieneneinheit symmetrisch ausgebildet sind. Eine andere Ausführungsform sieht vor, dass die Solarmodule und/oder die Schieneneinheit asymmetrisch ausgebildet sind. Dabei fällt der gemeinsame Massenschwerpunkt bzw der Volumenschwerpunkt der Solarmodule und der Schieneneinheiten zusammen bzw. auseinander mit dem gemeinsamen Volumenschwerpunkt und/oder Massenschwerpunkt der Solarmodule und der Schieneneinheiten. In einer Ausführungsform weicht der Massenschwerpunkt der Schieneneinheiten von dem Volumenschwerpunkt der Schieneneinheiten ab.

Dabei wird insbesondere für den Volumenschwerpunkt eine Einhüllende um die Schieneneinheiten betrachtet bzw. ein von den Schieneneinheiten aufgespannter Raum.

Weiter umfasst der Aufbau bzw. die Tragstruktur einen Zentralträger.

Entsprechend ist vorgesehen, dass der Aufbau bzw. die Tragstruktur einen Zentralträger aufweist, der für eine Aufnahme in der Aufnahme der Bewegungseinrichtung geeignet ist. Bevorzugt ist der Zentralträger asymmetrisch und/oder exzentrisch zu dem Aufbau, insbesondere in Bezug auf einen Schwerpunkt des Aufbaus, angeordnet ist. Der Zentralträger ist zur Anbindung des Aufbaus an die Bewegungseinrichtung ausgebildet. Der Zentralträger weist mindestens einen Bereich auf, der zum Zusammenwirken mit der Aufnahme der Bewegungseinrichtung ausgebildet ist. Hierzu weist der Bereich des Zentralträgers eine an die Kontur der Aufnahme angepasste Kontur auf. Bevorzugt sind die zusammenwirkenden Konturen komplementär ausgbildet. Vorzugsweise ist die Kontur des Zentralträgers in dem Bereich zum Zusammenwirken rotationsasymmetrisch ausgebildet, sodass ein Verdrehen des Zentralträgers in der Aufnahme vermieden ist.

Die Schieneneinheit ist in einer Ausführungsform direkt mit dem Zentralträger verbunden. In einer anderen Ausführungsform sind die Schieneneinheiten indirekt mit dem Zentralträger verbunden, beispielsweise über einen Trägerrahmen, der mit dem Zentralträger verbunden ist.

Die Schieneneinheit oder allgemein die Verbindungseinheit zum Verbinden des Solarmoduls oder der Solarmodule mit dem Zentralträger sind grundsätzlich beliebig ausführbar. In einer Ausführungsform ist eine Verbindungseinheit vorgesehen. In anderen Ausführungseinheiten sind mehrere Verbindungseinheiten vorgesehen. Die Verbindungseinheiten sind beispielsweise als Schienen, Profile, Bleche oder sonstige einfache Bauelemente ausgeführt. In einer Ausführung sind die Verbindungseinheiten lösbar mit dem Zentralträger verbunden. In einer anderen Ausführungsform sind die Verbindungseinheiten unlösbar mit dem Zentralträger verbunden, beispielsweise stoffschlüssig mittels Verkleben, Verschweißen, Löten oder dergleichen. Eine bevorzugte Ausführungsform sieht vor, dass die Verbindungseinheiten entlang des Zentralträgers bewegbar und/oder an einer gewünschten Position an dem Zentralträger feststellbar ausgebildet sind. Hierzu weisen die Verbindungseinheiten entsprechende Arretiermittel auf. Beispielsweise ist zumindest eine der Verbindungseinheiten als Trapezblech mit einer Ausnehmung ausgebildet. Die Ausnehmung korrespondiert zu dem Zentralträger, der in der Ausnehmung aufgenommen ist. Entsprechend ist das Trapezblech entlang des Zentralträgers verschiebbar und an einer gewünschten Position arretierbar. Bevorzugt sind mehrere Trapezbleche vorgesehen, an welchen sich die Solarmodule - direkt oder indirekt - befestigen lassen. Bevorzugt weist die Ausnehmung einen rotationsasymmetrischen Querschnitt auf, sodass ein Verdrehen des Trapezblechs relativ zu dem Zentralträger verhindert ist.

In einer Ausführungsform ist entsprechend vorgesehen, dass der Aufbau, ggf. mit Ausnahme des Zentralträgers, barrierefrei ausgebildet ist. Insbesondere ist die Barrierefreiheit auch bei maximal geschwenktem Aufbau um die Elevationsachse realisiert. Barrierefrei im Sinne der vorliegenden Erfindung bedeutet, dass Module beliebiger Tiefe verwendet werden können, ohne dass es zu einer Kollision zwischen den Modulen und einem Rahmenelement kommt. Entsprechend sieht eine Ausführungsform vor, dass die Verbindungseinheiten direkt an dem Zentralträger angeordnet sind, ohne dass ein weiteres Rahmenteil, beispielsweise ein Querträger, ein Längsträger, ein Trägerrahmen oder dergleichen erforderlich ist.

In einer bevorzugten Ausführungsform der vorliegenden Erfindung ist vorgesehen, dass der Zentralträger asymmetrisch und/oder exzentrisch zu dem Aufbau, insbesondere in Bezug auf einen Schwerpunkt des Aufbaus, angeordnet ist. In einer Ausführungsform weicht der Massen- und/oder Volumenschwerpunkt des Zentralträgers von dem Massen und/oder Volumenschwerpunkt des Solarmoduls bzw. der Solarmodulanordnung ab. In einer weiteren Ausführungsform weicht der Massen- und/oder Volumenschwerpunkt des Zentralträgers von dem Massen und/oder Volumenschwerpunkt der Schieneneinheit oder der Schieneneinheiten ab. In noch einer anderen Ausführungsform weicht der Massen- und/oder Volumenschwerpunkt des Zentralträgers von dem gemeinsamen Massen und/oder Volumenschwerpunkt der Schieneneinheit oder der Schieneneinheiten und dem Solarmodul oder den Solarmodulen ab. In wiederum einer weiteren Ausführungsform weicht der Volumenschwerpunkt des Zentralträgers von dem gemeinsamen Massenschwerpunkt von Schieneneinheit, Solarmodul und Zentralträger ab. In einer anderen Ausführungsform weicht der Volumenschwerpunkt des Zentralträgers von dem Massenschwerpunkt des Zentralträgers ab.

Die Abweichungen oder das Zusammenfallen von Massen- und/oder Volumenschwerpunkt der einzelnen Bauteile ist insbesondere in Bezug auf eine Ausgangsposition oder Ausgangslage zu verstehen. Das heißt, die Abweichungen und/oder das Zusammenfallen beziehen sich auf eine Ausgangsposition, in der keine Drehung um eine Elevationsachse erfolgt ist. Dabei ist unter einer Abweichung ein signifikante Abweichtung, das heißt, eine nicht nur toleranzbedingte oder aufgrund von Fertigungsungenauigkeiten bedingte Abweichung zu verstehen. Vielmehr ist hierunter eine konstruktionsbedingte, insbesondere gewollte und nicht nur zufällige oder ungewollte Abweichung zu verstehen.

Eine weitere Ausführungsform der vorliegenden Erfindung sieht vor, dass der Aufbau bzw. die Tragstruktur mindestens einen weiteren mit dem Zentralträger verbunden Träger aufweist. Bevorzugt weist der Aufbau mehrere weitere Träger auf, beispielsweise einen Trägerrahmen. Der Zentralträger und der weitere Träger bzw. die weiteren Träger sind in einer Ausführung als separate Baueinheiten ausgebildet. Bevorzugt sind der Zentralträger und der weitere Träger, beispielsweise der Trägerrahmen, miteinander verbundnen. Entsprechend weist in einer Ausführungsform der Trägerrahmen einen Außenrahmen und mindestens den Zentralträger auf, welcher bevorzugt zwei Träger des Außenrahmens verbindet, insbesondere strebenfrei verbinden.

Unter einer Strebe wird im Sinne der Erfindung ein bevorzugt diagonales Bauelement verstanden, welches zur Ableitung von Kräften, insbesondere von Druck- und/oder Schubkräften, und/oder zur Versteifung dient. Dabei ist die Strebe an zwei unterschiedlich ausgerichteten Abschnitten ausgebildet. Unter Streben können im Sinne der Erfindung auch diagonale Drahtverbindungen umfasst sein, welche beispielsweise einen Querträger mit einem Längsträger verbinden. Der erfindungsgemäße Trägerrahmen weist keine Streben auf, das heißt, der Trägerrahmen weist keine diagonalen Bauelemente auf.

Vielmehr weist der Trägerrahmen den Außenrahmen auf. Der Außenrahmen umfasst mindestens drei miteinander verbundene Träger. Bevorzugt umfasst der Außenrahmen vier Träger, die nach Art eines Fensterrahmens, das heißt in einer Draufsicht rechteckig oder quadratisch, angeordnet sind. Zwei Träger sind als Längsträger ausgebildet und liegen sich gegenüber, insbesondere parallel beabstandet gegenüber. Zwei Träger sind als Querträger ausgebildet und liegen sich ebenso gegenüber, insbesondere parallel beabstandet gegenüber. Die Querträger sind quer, insbesondere rechtwinklig oder nahezu rechtwinklig zu den Längsträgern angeordnet. In anderen Ausführungsformen umfasst der Außenrahmen mehr als vier Träger, wobei jeweils ein Träger mit zwei benachbarten Trägern an deren Enden miteinander verbunden ist, sodass sich ein Außenrahmen ergibt. Bevorzugt sind die Träger in einer Ebene ausgebildet. In anderen Ausführungsformen sind auch Anordnungen mit Trägern ausgeführt, die aus der Ebene herausragen, das heißt in quer zueinander liegenden Ebenen liegend und/oder windschief zueinander, ausgebildet sind.

Die Träger sind bevorzugt als Profilträger ausgebildet. In einer Ausführungsform sind die Träger als massives Profil, beispielsweise als I-Träger, Doppel-T-Träger oder dergleichen ausgebildet. In anderen Ausführungen sind die Träger als Hohlprofil, beispielsweise als O-Profil oder dergleichen ausgebildet. Bevorzugt weisen alle Träger eines Außenrahmens das gleiche Profil, beispielsweise ein I-Profil auf. In anderen Ausführungsformen ist zumindest ein Träger mit einem unterschiedlichen Profil zu den anderen Trägern ausgebildet.

Da der Außenrahmen bei entsprechender Größe und Abmessung für größere Lasten, wie sie beispielsweise durch Windlasten und/oder Gesichtskräfte durch aufgenommene Solarmodule hervorgerufen werden, nicht ohne Weiteres für eine längere Dauer standhalten, weist der Außenrahmen mindestens den inneren Zentralträger auf. Der mindestens eine Zentralträger verbindet zwei voneinander beabstandete Träger. In einer Ausführungsform verbindet der Zentralträger zwei Querstreben miteinander. Hierzu ist der Zentralträger bevorzugt parallel zu mit den Querträgern verbundenen Längsträgern ausgebildet, sodass der Zentralträger etwa senkrecht zu den Querträgern angeordnet ist. Dabei spannt sich der Zentralträger längs durch den gesamten, von dem Außenrahmen aufgespannten Raum. Bevorzugt ist der Zentralträger außermittig zu den Querträgern angeordnet. Das heißt, der Massen- und/oder Volumenschwerpunkt des Zentralträgers weicht von dem Massen- und/oder Volumenschwerpunkt des Rahmens ab.

In einer Ausführungsform sind die Träger als Stahlträger ausgebildet. In einer anderen Ausführungsform sind die Träger als Kunststoffträger ausgebildet. Bevorzugt sind die Träger aus einem einzigen Material ausgebildet, bevorzugt aus einem korrosionsbeständigen Material. In einer Ausführungsform weisen die Träger eine Beschichtung zur Vermeidung von Korrosion auf.

Eine Ausführungsform der Erfindung sieht vor, dass der Außenrahmen aus zwei Längsträgern und zwei Querträgern, welche die Längsträger miteinander verbinden, strebenfrei gebildet ist. Auf diese Weise ist eine in der Draufsicht rechteckiger oder quadratischer Außenrahmen geschaffen, der insbesondere für rechteckige oder quadratische Solarmodule geeignet ist. Die Solarmodule lassen sich so über Verbindungselemente mit dem Außenrahmen verbinden.

In einer weiteren Ausführungsform ist vorgesehen, dass der innere Zentralträger mit den beiden Querträgern verbunden ist. Statt Streben vorzusehen, das heißt Bauteile, welche Längs- und Querträger verbinden, ist der Zentralträger als Längselement ausgebildet, welches die beiden Querträger miteinander verbindet. Der Zentralträger ist bevorzugt im Wesentlichen senkrecht zu den Querträgern ausgebildet. In einer anderen Ausführungsform ist der Zentralträger mit den beiden Längsträgern verbunden. Bevorzugt ist der Zentralträger stoffschlüssig, zum Beispiel mittels Schweißen, mit den Querträgern verbunden.

Die Erfindung sichließt auch die technische Lehre ein, dass bei einer Nachführvorrichtung, insbesondere bei einer Solarmodulnachführvorrichtung, zur Nachführung mindestens eines Aufbaus nach einem Sonnenstand, umfassend mindestens eine Bewegungseinrichtung und mindestens einen Aufbau, vorgesehen ist, dass die Bewegungseinrichtung als erfindungsgemäße Bewegungseinrichtung und/oder der Aufbau als ein erfindungsgemäßer Aufbau ausgebildet ist. Die Nachführvorrichtung umfasst den mit der Bewegungseinrichtung gekoppelten Aufbau. In einer bevorzugten Ausführungsform ist eine Steuerung vorgesehen, welche die Bewegungseinrichtung gemäß dem Sonnenstand steuert. Dabei ist in einer Ausführungsform eine selbsttätige Steuerung vorgesehen. Diese selbsttätige Steuerung erkennt einen Sonnenstand und steuert die Bewegungseinrichtung entsprechend. In einer anderen Ausführungsform ist eine rechnerbasierte Steuerung vorgesehen, welche den Sonnenstand abhängig von dem aktuellen Standpunkt berechnet und eine entsprechende Steuerung der Bewegungseinrichtung vornimmt. Auch manuelle Steuerungen lassen sich vorsehen.

Auch schließt die Erfindung die technische Lehre ein, dass bei einem Solarsystem, insbesondere einem Solarsystem für eine Photovoltaik, konzentrierende Solarenergie und/oder eine Solarthermieanwendung, umfassend mindestens eine Bewegungseinrichtung und mindestens einen mit der Bewegungseinrichtung gekoppelten Aufbau mit mindestens einem Solarsystemmodul, vorgesehen ist, dass der Aufbau als erfindungsgemäßer Aufbau und/oder die Bewegungseinrichtung als erfindungsgemäße Bewegungseinrichtung ausgebildet ist/sind. Das Solarsystemmodul ist beispielsweise als Solarkollektor, Reflektor oder dergleichen ausgebildet. Die Bewegungseinrichtung ist bevorzugt auf einem Standpfeiler oder dergleichen angeordnet. Der Standpfeiler ist beispielsweise höhenvertellbar ausgeführt.

Zudem schließt die Erfindung weiter die technische Lehre ein, dass bei einem Herstellverfahren für eine erfindungsgemäße Nachführvorrichtung, insbesondere eine erfindungsgemäße Solarnachführvorrichtung, zur Nachführung mindestens eines Aufbaus, insbesondere eines erfindungsgemäßen Aufbaus, nach einem Sonnenstand, wobei ein Aufbau an einer Bewegungseinrichtung, insbesondere einer erfindungsgemäße Bewegungseinrichtung, angeordnet wird, vorgesehen ist, dass der Aufbau asymmetrisch an der Bewegungseinrichtung angeordnet wird. Das erfindungsgemäße Herstellverfahren ist insbesondere schneller durchführbar. So wird in einer Ausführungsform die Bewegungseinrichtung vormontiert bzw. einteilig hergestellt. Hierdurch muss nicht erst eine Basis zur Montage einer beispielsweise als Drehkopf ausgebildeten Bewegungseinrichtung geschaffen werden. Die Bewegungseinrichtung wird direkt an einem Standpfeiler oder einer anderen Tragstruktur montiert. Hierzu sind entsprechende Verbindungsflächen, Flansche und/oder Anschlussstutzen vorgesehen. Das Verbinden erfolgt beispielsweise mittels Verschrauben. Ein Trägerrahmen wird vor ort montiert. Durch die strebenfreie Ausbildung entfällt eine Verstrebung. Lediglich der Zentralträger wird außermittig montiert. Zudem reduziert sich die Herstellzeit aufgrund der reduzierten Teileanzahl deutlich. Insbesondere erfolgt die komplette Montage des Solarsystems in weniger als 400 min, weiter bevorzugt in weniger als 300 min, noch weiter bevorzugt in weniger als 200 min und am meisten bevorzugt in weniger als 150 min.

In einer Ausführungsform wird das Solarmodul an der Schieneneinheit und dann an dem Trägerrahmen befestigt. Vorzugsweise wird die Schieneneinheit mittels Verschrauben an dem Trägerrahmen befestigt. Der Trägerrahmen wird durch Einlegen des Zentralträgers in die Aufnahme mit der Bewegungseinrichtung verbunden. Hierzu befindet sich die Bewegungseinrichtung ein einer Ausgangsposition. Die Bewegungseinrichtung wird an dem Standpfeiler befestigt. Dies erfolgt bevorzugt vor der Montage des Zentralträgers an der Bewegungseinrichtung.

Insgesamt lassen sich folgende Vorteile realisieren.

Die erfindungsgemäße Lösung ist gegenüber dem Stand der Technik deutlich kompakter. Gegenüber dem Stand der Technik können bevorzugt 200% mehr Systeme in einer Transporteinheit versandt werden, weiter bevorzugt 220% mehr Systeme in einer Transporteinheit, weiter bevorzugt 240% mehr Systeme in einer Transporteinheit versandt werden, jeweils in Bezug auf eine gleiche Modulfläche. Das heißt, bei einem System mit einer Modulfläche oder ausgelegt für eine Modulfläche von zum Beispiel 70 m² ist erfindungsgemäß eine Platzersparnis, Volumenersparnis oder Packvolumenersparnis von etwa 200%, bevorzugt von etwa 220%, weiter bevorzugt von etwa 240% und am meisten bevorzugt von über 250% realisierbar.

Zudem ist die Lösung leichter im Vergleich zum Stand der Technik. Gegenüber dem Stand der Technik beträgt die Gewichtsreduzierung des Gesamtsystems bezogen auf eine gleiche Modulfläche bevorzugt 20%, weiter bevorzugt 25% Gewichtsreduzierung des Gesamtsystems, weiter bevorzugt 30% Gewichtsreduzierung des Gesamtsystems. Das Gesamtsystem umfasst dabei zumindest die Dreheinheiten, das heißt den Bewegungskopf, bevorzugt die Dreheinheiten zuzüglich des Aufbaus. Nicht umfasst ist das Fundament. Umfasst sein kann der Mast oder die Tragstruktur ohne Fundament. Besonders im Verhältnis der Modulfläche zu einem Packvolumen bzw zu einem Gewicht der Bauteile ergeben sich deutliche Vorteile.

Unter einer Transporteinheit im Sinne der vorliegenden Erfindung ist bevorzugt ein quaderförmiger Container oder dergleichen zu verstehen.
Die Erfindung wird nachfolgend anhand von in den Zeichnungen dargestellten Ausführungsbeispielen näher erläutert. Für gleiche oder ähnliche Bauteile oder Merkmale werden dabei einheitliche Bezugszeichen verwendet. Merkmale oder Bauteile verschiedener Ausführungsformen können kombiniert werden, um so weitere Ausführungsformen zu erhalten. Sämtliche aus den Ansprüchen der Beschreibung oder Zeichnungen hervorgehenden Merkmale und/oder Vorteile einschließlich konstruktiver Einzelheiten, räumliche Anordnung und Verfahrensschritte, können so für sich als auch in verschiedensten Kombinationen erfindungswesentlich sein.

Es zeigen:
- Figur 1: schematisch eine perspektivische Darstellung einer Nachführvorrichtung mit einem Trägerrahmen in zwei unterschiedlich ausgelenkten Positionen;
- Figur 2: schematisch eine Seitenansicht der Nachführvorrichtung nach Figur 1;
- Figur 3: schematisch eine Perspektivansicht der Nachführvorrichtung nach Figur 1 mit dem Trägerrahmen in einer ersten, nichtausgelenkten Position;
- Figur 4: schematisch eine Perspektivansicht der Nachführvorrichtung nach Figur 1 mit dem Trägerrahmen in einer zweiten, ausgelenkten Position;
- Figur 5: schematisch in einer Perspektivansicht einen Ausschnitt der Nachführvorrichtung nach Fig 1 in der zweiten, ausgelenkten Position, ohne Trägerrahmen;
- Figur 6: schematisch in einer Perspektivansicht einen Ausschnitt der Nachführvorrichtung nach Fig 1 in der ersten, nichtausgelenkten Position, ohne Trägerrahmen;
- Figur 8: schematisch in einer Perspektivansicht den Ausschnitt nach Figur 6 ohne Aktuator und ohne Trägerrahmenaufnahme;
- Figur 9: schematisch in einer Perspektivansicht den Ausschnitt nach Figur 8 ohne Standpfeiler;
- Figur 10: schematisch in einer Querschnittsansicht die Anordnung des Zentralträgers;
- Figur 11: schematisch in einer Seitenansicht den Zentralträger mit verschiebbaren Trapezblechen und
- Figur 12: schematisch in einer Draufsicht die Bewegungseinrichtung mit Zentralträger.

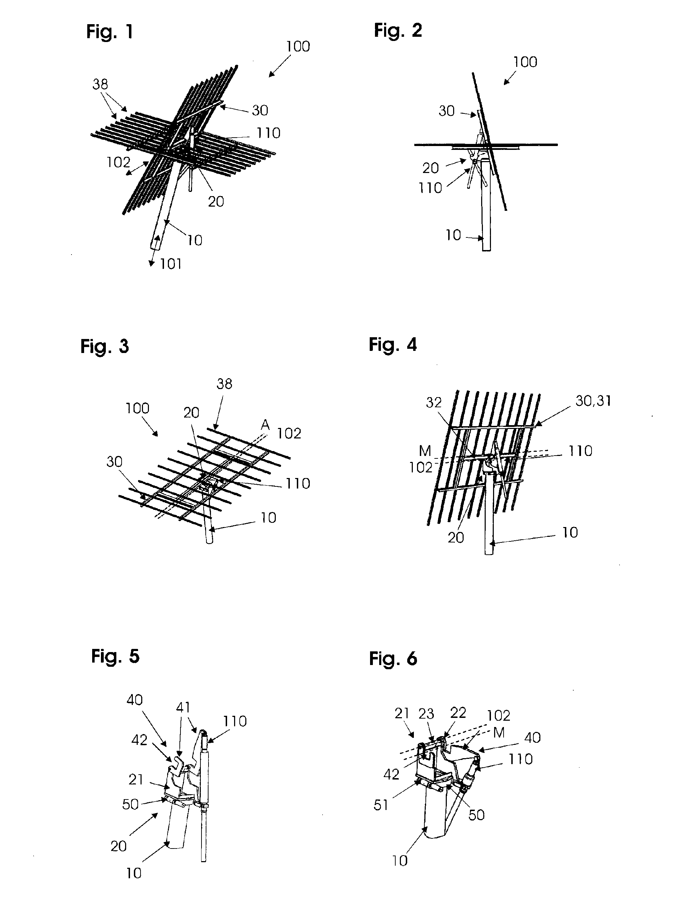

Die Figur 1 zeigt schematisch eine perspektivische Darstellung einer Nachführvorrichtung 100 mit einem Trägerrahmen 30 in zwei unterschiedlich ausgelenkten Positionen. Die Nachführvorrichtung 100 ist als Solarmodulnachführvorrichtung zur Nachführung mindestens eines Kollektors, Absorbers, Reflektors und/oder Photovoltaikmoduks nach einem Sonnenstand ausgebildet. Hierzu umfasst die Nachführvorrichtung 100 einen Standpfeiler 10, eine als Bewegungskopf ausgebildete Bewegungseinrichtung 20 und einen Aufbau, von dem hier nur der Trägerrahmen 30 samt Schieneneinheit 38 dargestellt ist. Der Trägerrahmen 30 ist über die Bewegungseinrichtung 20 mit dem Standpfeiler 10 verbunden. Dabei ist die Verbindung so ausgebildet, dass der Trägerrahmen 30 um mindestens eine Drehachse 101, 102 drehbar mit dem Standpfeiler 10 verbunden ist. In dem dargestellten Ausführungsbeispiel sind zwei Drehachsen 101, 102 vorgesehen. Eine erste Drehachse 101 ist als vertikale Drehachse oder Azimutachse 101 ausgebildet. Diese verläuft in etwa senkrecht durch den Standpfeiler 10. Eine zweite Drehachse 102 ist als horizontale Drehachse oder Elevationsachse 102 ausgebildet und verläuft senkrecht zu der ersten Drehachse 101 in eine Breitenrichtung des Aufbaus. Die Bewegungseinrichtung 20 ist mit dem Standpfeiler 10 um die erste Drehachse 101 drehbar gekoppelt. Der Trägerrahmen 30 ist mit der Bewegungseinrichtung 20 um die zweite Drehachse 102 drehbar gekoppelt. An dem Trägerrahmen 30 sind die Schieneneinheiten 38 zur Aufnahme von Solormodulen oder Solarplatten und dergleichen ausgebildet. Die Schieneneinheiten 38 sind als Profile, Profilschienen und dergleichen ausgebildet. Diese sind etwa äquidistant und/oder parallel voneinander beabstandet an dem Trägerrahmen 30 angeordnet. Dabei ragen die Schieneneinheiten 38 über den Trägerrahmen 30 hinaus. An dem Trägerrahmen 30 sind die Schieneneinheiten 38 ortsfest ausgebildet. Zum Verschwenken oder Drehen des Aufbaus um die Elevationsachse 102 ist ein Aktuator 110 vorgesehen. Der Aktuator 110 ist vorliegend als Linearaktuator ausgebildet. Dieser greift an der Bewegungseinrichtung 20 an einem äußeren Bereich an. Der Aufbau, genauer der Trägerrahmen 30 mit den Schieneneinheiten ist in zwei unterschiedlichen Lagen oder Positionen dargestellt. In einer ersten Position befindet sich der Aufbau in einer Ausgangsposition oder Ausgangslage. Der Aufbau ist in dieser Position etwa waagerecht oder horizontal ausgerichtet. In einer zweiten, ausgelenkten Position ist der Aufbau gegenüber der Ausgangslage um etwa 85° um die Elevationsachse 102 verdreht dargestellt. Die beiden unterschiedlichen Positionen sind in Figur 2 deutlicher dargestellt.

Die Figur 2 zeigt schematisch eine Seitenansicht der Nachführvorrichtung 100 nach Figur 1. Die Ansicht erfolgt aus bzw. in Richtung der Elevationsachse 102. Für gleiche oder ähnliche Bauteile werden gleiche Bezugszeichen verwendet, auf eine detaillierte Beschreibung bereits beschriebener Bauteile wird verzichtet. In der Seitenansicht sind die beiden ausgelenkten Lagen oder Positionen des Aufbaus bzw. des Trägerrahmens 30 und der Schieneneinheiten 38 sowie der Bewegungseinrichtung 20 deutlich zu erkennen. In der ersten Position, das heißt in der Ausgangslage, ist der Trägerrahmen 30 samt Schieneneinheiten 38 etwa horizontal ausgerichet, das heißt, der Trägerrahmen 30 liegt mit der von ihm aufgespannten Ebene etwa parallel zu einem hier nicht dargestellten Boden, der in dem Bereich im Wesentlichen horizontal verläuft. In der ausgelenkten zweiten Position ist der Trägerrahmen 30 etwa um 80° bis 85° gegenüber einer Horizontalen, das heißt um die Elevationsachse 102, verschwenkt. Das Verschwenken erfolgt über den Aktuator 110, welcher an der Bewegungseinrichtung 20 und dem Trägerrahmen 30 angeordnet ist. Der Aktuator 110 ist als Linear- oder Hubaktuator ausgebildet. Durch ein Ausfahren eines Kolbens oder allgemein eines Stellglieds, wird der Trägerrahmen 30 um die Elevationsachse 102 in die zweite Position verschwenkt. Ein Einfahren des Stellglieds bewirkt ein Verschwenken des Trägerrahmens 30 um die Elevationsachse 102 in Richtung erste Position. Die beiden Positionen sind in den Figuren 3 und 4 separat dargestellt.

Die Figur 3 zeigt schematisch eine Perspektivansicht der Nachführvorrichtung 100 nach Figur 1 mit dem Trägerrahmen 30 und den Schieneneinheiten 38 in der ersten, nichtausgelenkten Position. Hier spannt der Trägerrahmen 30 eine Ebene auf, die im Wesentlichen horizontal angeordnet ist. Diese Position ist für einen Sonnenstand optimal, bei dem zum Beispiel die Sonne senkrecht über dem Trägerrahmen steht. Dies entspricht einer ersten Extremposition. Zur optimalen Solarenergieausbeute sind der Trägerrahmen 30 bzw. die daran angerodneten Solarmodule derart ausgerichtet, dass die Sonnenstrahlen senkrecht auf die Solarmodule bzw. den Trägerrahmen 30 einfallen. Eine zweite Extremposition ist in Figur 4 dargestellt. Dargestellt ist zudem die asymmetrische Anordnung eines Zentralträgers 32 des Trägerrahmens 30. Der Zentralträger weist eine Mittelachse A auf, welche - hier zur Vereutlichung übertrieben dargestellt - versetzt ist zu der Elevationsachse 102, jeweils in der Ausgangsposition. Die Mittelachse A verläuft dabei parallel zu der Elevationsachse 102 durch einen Volumen- und/oder Massenschwerpunkt des Zentralträgers 32.

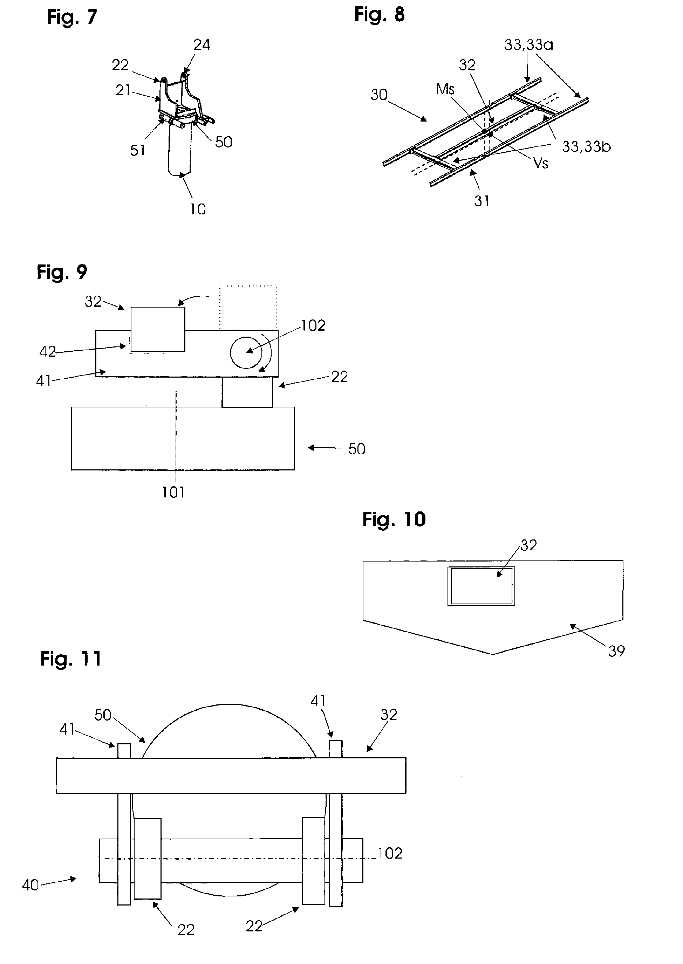

Die Figur 4 zeigt schematisch eine Perspektivansicht der Nachführvorrichtung 100 nach Figur 1 mit dem Trägerrahmen 30 in einer zweiten ausgelenkten Position. In dieser Position ist der Trägerrahmen 30 etwa um 80° bis 85° gegenüber der Position in Figur 3 verschwenkt. Diese Position korrespondiert etwa zu einem Tiefstand der Sonne, in dem diese noch den Trägerrahmen 30 bestrahlen kann. Deutlich ist hier zu erkennen, wie der Aktuator 110 ausgefahren ist, sodass der Trägerrahmen 30 um die Elevationsachse 102 verschwenkt ist. Der Trägerrahmen 30 ist als Außenrahmen 31 ausgebildet, der den inneren Zentralträger 32 umfasst. Die genauere Beschreibung des Trägerrahmens 30 erfolgt bei Figur 11. In Figur 4 ist deutlich der Versatz von Elevationsachse 102 und der durch den Massen- und/oder Volumenschwerpunkt des Zentralträgers 32 parallel versetzt zur Elevationsachse 102 verlaufenden Mittelachse M.

Die Figur 5 zeigt schematisch in einer Perspektivansicht einen Ausschnitt der Nachführvorrichtung 100 nach Fig 1 in der zweiten, ausgelenkten Position, ohne Trägerrahmen. Deutlich ist hier die Bewegungseinrichtung 20 dargestellt. In der dargestellten Ausführungsform umfasst die Bewegungseinrichtung 20 eine um die Elavationsachse 102 drehbare Dreheinheit 40. Die Dreheinheit 40 umfasst zwei miteinander verbundene, beabstandete, auskragende Hebelarme 41. Die Hebelarme 41 sind mit einer unterschiedlichen Auskragung ausgebildet. In beiden Hebelarmen 41 ist in Richtung der Elevationsachse 102 fluchtend je eine Aufnahme 42 ausgebildet. Die Aufnahme 42 ist als eine Nut mit etwa rechteckigem Querschnitt ausgebildet, sodass die rechteckige Kontur der entsprechenden Außenkontur des Zentralträgers 32 entspricht. Des weiteren umfasst die Bewegungseinrichtung 20 eine Lagereinheit 21 zur drehbaren Lagerung der Dreheinheit 40 um die Elevationsachse. Diese ist in Figur 6 deutlicher dargestellt. Zudem umfasst die Bewegungseinrichtung 20 eine weitere Dreheinheit 50 für eine Drehung der Bewegungseinrichtung 20 um die Azimutachse 101.

Die Figur 6 zeigt schematisch in einer Perspektivansicht einen Ausschnitt der Nachführvorrichtung nach Figur 1 in der ersten, nichtausgelenkten Position, ohne Trägerrahmen. In dieser Ansicht ist der Versatz der Aufnahme 42 in Bezug auf die Elevationsachse 102 deutlich zu erkennen. Durch diesen Versatz ist der Zentralträger 32 ebenfalls versetzt zu der Elevationsachse 102 angeordnet. Die Dreheinheit 40 ist drehbar um die Elevationsachse 102 mit der Lagereinheit 21 verbunden. Die Lagereinheit 21 weist zwei voneinander beabstandete Lagerböcke 22 mit entsprechenden Lagerstellen zur Aufnahme eines Wellen- oder Achselements 23 auf. Die Elevationsachse 102 bildet die Mittelachse des Achselements 23. Die Dreheinheit 40 ist drehfest mit dem Achselement 23 verbunden. Das Achselement 23 ist über ein Kugellager an der Lagerstelle gelagert. Bei einem Ausfahren des Linearaktuators 110 wird somit die Dreheinheit 40 um die Elevationsachse verschwenkt. Dargestellt ist ebenfalls die zweite Dreheinheit 50, welche hier eine Aktuator 51 zum Durchführen einer aktuatorbetätigten Drehung der Bewegungseinrichtung 20 um die Azimutachse 101 aufweist.

Ein Befestigungsabschnitt des Aktuators 110 an der Lagereinheit 21 ist etwa gabelförmig ausgebildet. Zur Lagerung des Aktuators 110 an dem Befestigungsabschnitt snd zwei Lagerstellen zur Aufnahme einer Achse aufgenommen, sodass der Aktuator 110 drehbar an dem Befestigungsabschnitt aufgenommen ist.

Die Figur 8 zeigt schematisch in einer Perspektivansicht den Ausschnitt nach Figur 6 ohne Aktuator und ohne Dreheinheit 40. Die dargestellte Lagereinheit 21 weist zwei als Durchgangsbohrungen ausgebildete Lagerstellen 24 auf, in welcher das Achselement 23 gelagert ist.

Die Figur 9 zeigt schematisch in einer Perspektivansicht den Trägerrahmen 30 nach Figur 1 in Alleinstellung. Vorliegend umfasst der Trägerrahmen einen Außenrahmen 31 mit zwei Längsträgern 33a und zwei Querträgern 33b, die abwechselnd etwa rechtwinklig zueinander angeordnet sind. Der Zentralträger 32 ersteckt sich zwischen den Querträgern 33b. Dabei ist der Zentralträger 32 senkrecht zu den Querträgern 33b mit diesen verbunden. Querstreben oder dergleichen, das heißt Diagonalelemente, die unterschiedlich ausgerichteten Träger 33a, 33b miteinander verbinden, sind nicht vorgesehen, sodass der Trägerrahmen 30 strebenfrei, insbesondere querstrebenfrei, ausgebildet ist. Außermittig ist der Zentralträger 32 vorgesehen. Dieser verbindet die beiden Querträger 33. Durch die außermittige Anordnung fallen der Massenschwerpunkt Ms und der Volumenschwerpunkt Vs des Trägerrahmens 30 auseinanderm wie durch die schematische Darstellung übertrieben dargestellt.

Die Figur 10 zeigt schematisch in einer Querschnittsansicht die Anordnung des Zentralträgers 32 in der Aufnahme 42 des Hebelarms 41. Gegenüber dem Stand der Technik (gestrichelt dargestellt) ist der Zentralträger 32 seitlich und in Richtung Azimutachse 101 versetzt zu der als Elevationsachse ausgebildeten Drehachse 102 angeordnet. Der Versatz ist insbesondere ein Versatz der Abstände der jeweiligen gedachten Mittellinien, das heißt der Mittelline der Aufnahme 42 bzw. de Zentralträgers 32 zu der Elevationsachse bzw zu der Azimutachse. Dabei verläuft die Mittellinie durch den jeweiligen Volumen- bzw. Massenschwerpunkt des entsprechenden Bauteils oder der entsprechenden Ausnehmung oder Aussparung.

Die Figur 11 zeigt schematisch in einer Seitenansicht den Zentralträger 32 mit verschiebbaren Trapezblechen 39. Die Trapezbleche weisen eine als Durchgangsöffnung ausgebildete Ausnehmung 39a auf, welche an die Kontur des Zentralträgers 32 - hier beide rechteckig - angepasst ist. Das Trapezblech 39 ist auf den Zentralträger 32 aufsteckbar und entlang des Zentralträgers 32 verschiebbar ausgebildet. Bei Erreichen der gewünschten Position für das Trapezblech 39 ist dieses arretierbar. Zur Befestigung von Solarmodulen sind mehrere Trapezbleche 39 vorgesehen.

Die Figur 12 zeigt schematisch in einer Draufsicht die Bewegungseinrichtung 20 mit dem Zentralträger 32. Dargestellt ist sowohl die Dreheinheit 40 mit der als Elevationsachse ausgeführten Drehachse 102 als auch die Dreheinheit 50 mit der als Azimutachse ausgeführten Drehachse 101 (hier nicht dargestellt). Hier ist deutlich zu erkennen, wie der Zentralträger 32 in der Aufnahme 42 der beiden Hebelarme 41 seitlich befestigt zu der Elevationsachse aufgenommen und angeordnet ist. Die beiden Lagerböcke 22 sind derart angeordnet, dass diese eine Breite der Dreheinheit 50 nicht überschreiten.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Bezugszeichenliste

- 10: Standpfeiler
- 20: Bewegungseinrichtung
- 21: Lagereinheit
- 22: Lagerbock
- 23: Achselement
- 24: Lagerstelle
- 30: Trägerrahmen
- 31: Außenrahmen
- 32: Zentralträger
- 33: Träger
- 33a: Längsträger
- 33b: Querträger
- 38: Schieneneinheit
- 39: Trapezblech
- 40: Dreheinheit (Elevationsachse)
- 41: Hebelarm
- 42: Aufnahme
- 50: Dreheinheit (Azimutachse)
- 51: Aktuator
- 100: Nachführvorrichtung
- 101: Drehachse (Azimutachse)
- 102: Drehachse (Elevationsachse)
- 110: Aktuator
- Ms: Massenschwerpunkt
- Vs: Volumenschwerpunkt
- M: Mittelachse (Zentralträger)

## Patentansprüche

1. Bewegungseinrichtung (20) für eine Nachführvorrichtung (100) eines Solarsystems, insbesondere zum Bewegen eines mit der Bewegungseinrichtung (20) verbundenen Aufbaus in Bezug auf einen Sonnenstand, umfassend
mindestens eine um mindestens eine Elevationsachse (102) drehbare Dreheinheit (40) mit mindestens einer Aufnahme (42) zum Aufnehmen des Aufbaus,
**dadurch gekennzeichnet, dass**
die Dreheinheit (40) und/oder die Aufnahme (42) asymmetrisch und/oder exzentrisch relativ zumindest zu der Elevationsachse (102) ausgebildet ist/sind.

2. Bewegungseinrichtung (20) nach Anspruch 1, **dadurch gekennzeichnet, dass** die Aufnahme (42) in Bezug auf eine Richtung von der Elevationsachse (102) in Richtung Aufbau quer zu dieser Richtung, insbesondere lateral und/oder entgegen der Richtung angeordnet ist.

3. Bewegungseinrichtung (20) nach Anspruch 1 oder 2, **dadurch gekennzeichnet, dass** die Dreheinheit (40) mindestens einen auskragenden Hebelarm (41) aufweist.

4. Bewegungseinrichtung (20) nach einem der vorherigen Ansprüche 1 bis 3, **dadurch gekennzeichnet, dass**
zumindest eine weitere Bewegungseinheit (50) vorgesehen ist, um den verbundenen Aufbau in Richtung mindestens eines weiteren Freiheitsgrades der Bewegungseinrichtung (20) zu bewegen.

5. Bewegungseinrichtung (20) nach einem der vorherigen Ansprüche 1 bis 4, **dadurch gekennzeichnet, dass**
eine der weiteren Bewegungseinheiten (50) als ein zumindest um eine Azimutachse (101) drehbarer Bewegungsantrieb ausgebildet.

6. Bewegungseinrichtung (20) nach einem der vorherigen Ansprüche 1 bis 5, **dadurch gekennzeichnet, dass**
die Bewegungseinrichtung (20) mindestens eine Lagereinheit (21) zur drehbaren Lagerung der Dreheinheit (40) aufweist.

7. Bewegungseinrichtung (20) nach einem der vorherigen Ansprüche 1 bis 7, **dadurch gekennzeichnet, dass**
die Lagereinheit (21) und die mindestens eine weitere Bewegungseinheit (50) integriert ausgebildet sind.

8. Aufbau, insbesondere ein Solaraufbau, umfassend
mindestens eine um eine Elevationsachse (102) schwenkbare Tragstruktur und/oder mindestens ein Solarmodul,
**dadurch gekennzeichnet, dass**
der Aufbau asymmetrisch zumindest in Bezug auf die Elevationsachse (102) ausgebildet ist.

9. Aufbau nach Anspruch 8, **dadurch gekennzeichnet, dass**
die Tragstruktur einen Zentralträger (32) aufweist, der für eine Aufnahme in der Aufnahme (42) der Bewegungseinrichtung (20) geeignet ist.

10. Aufbau nach Anspruch 8 oder 9, **dadurch gekennzeichnet, dass**
der Zentralträger (32) asymmetrisch und/oder exzentrisch zu dem Aufbau, insbesondere in Bezug auf einen Schwerpunkt des Aufbaus, angeordnet ist.

11. Aufbau nach einem der vorherigen Ansprüche 8 bis 10, **dadurch gekennzeichnet, dass**
die Tragstruktur mindestens einen weiteren mit dem Zentralträger (32) verbunden Träger (33) aufweist.

12. Nachführvorrichtung (100), insbesondere eine Solarmodulnachführvorrichtung, zur Nachführung mindestens eines Aufbaus nach einem Sonnenstand, umfassend mindestens eine Bewegungseinrichtung (20) und
mindestens einen Aufbau,
**dadurch gekennzeichnet, dass**
die Bewegungseinrichtung (20) als Bewegungseinrichtung (20) nach einem der Ansprüche 1 bis 7 und/oder der Aufbau als Aufbau nach einem der Ansprüche 8 bis 11 ausgebildet ist.

13. Nachführvorrichtung (100) nach Anspruch 12, **dadurch gekennzeichnet, dass** der Aufbau asymmetrisch an der Bewegungseinrichtung (20) angeordnet ist.

14. Solarsystem, insbesondere ein Solarsystem für eine Photovoltaik, konzentrierende Solarenergie und/oder eine Solarthermieanwendung umfassend
mindestens eine Bewegungseinrichtung (20) und
mindestens einen mit der Bewegungseinrichtung (20) gekoppelten Aufbau mit mindestens einem Solarsystemmodul,
**dadurch gekennzeichnet, dass**
der Aufbau als Aufbau nach einem der Ansprüche 8 bis 11 und/oder die Bewegungseinrichtung (20) als Bewegungseinrichtung (20) nach einem der Ansprüche 1 bis 7 ausgebildet sind.

15. Herstellverfahren für eine Nachführvorrichtung (100), insbesondere eine Nachführvorrichtung, nach einem der vorherigen Ansprüche 12 oder 13, zur Nachführung mindestens eines Aufbaus, insbesondere eines Aufbaus nach einem der Ansprüche 8 bis 11, nach einem Sonnenstand, wobei der Aufbau an einer Bewegungseinrichtung (20), insbesondere einer Bewegungseinrichtung (20) nach einem der Ansprüche 1 bis 7, angeordnet wird, **dadurch gekennzeichnet, dass**
der Aufbau asymmetrisch an der Bewegungseinrichtung (20) angeordnet wird.
